# EUROPEAN PATENT SPECIFICATION

(11) **EP 1 836 895 B1**
(45) Date of publication and mention of the grant of the patent: **20.04.2011**
(21) Application number: 07012871.5
(22) Date of filing: 04.02.2005
(51) Int. Cl.: A21C 3/02, B05C 1/08

(54) **Silicone rolling pin**
Silikon-Teigrolle
Rouleau à pâtisserie en silicone

(30) Priority: 05.02.2004 US 542308 P; 13.02.2004 US 544617 P; 22.04.2004 US 830286
(43) Date of publication of application: 26.09.2007
(62) Divisional of application: 05712729.2
(73) Proprietor: Fiesta Products LLC, Clark, NJ 07066 (US)
(72) Inventor: Dua, Gregory C., Clark NJ 07066 (US); Sadofsky, Rick, Bellmore NY 11710 (US); Bloom, Edward J., Fair Haven NJ 07704 (US)
(74) Representative: Schwahn, Hartmut

(56) References cited:
- DE-U1- 8 508 923
- DE-U1- 8 708 275
- FR-A- 1 092 466
- FR-A1- 2 788 405
- GB-A- 805 202
- JP-A- 57 026 546
- US-A- 29 006
- US-A- 1 534 907
- US-A- 1 807 009
- US-A- 2 205 842
- US-A- 2 683 428
- US-A- 2 715 879
- US-A- 2 783 719
- US-A- 3 831 238
- US-A- 5 162 119

## Description

### CROSS-REFERENCE TO RELATED APPLICATIONS

This application is based upon and claims priorityof U.S. Provisional Patent Application Serial No. 60/544,617 filed by Gregory C. Dua et al. on February 13,2004 (PP/4525-4) and U.S. Provisional Patent Application Serial No. 60/542,308 filed by Gregory C. Dua et al. on February 5,2004 (PP/4525-2), the disclosures of which are incorporated by reference.

### BACKGROUND OF THE INVENTION

### 1. Field of the Invention

The invention relates to a rolling pin, and more particularly to a rolling pin which uses the non-stick properties of silicone on an exterior jacket of the rolling pin.

### 2. Background Art

The most important use of a rolling pin is for rolling dough for making pastries, etc. It is vital that the dough does not stick to the pin when rolling. Dough sticking to the pin has the following disadvantages. (1) It takes more time to complete the job and therefore is less efficient. (2) Before and during rolling, flour must be added to the dough and rubbed on the pin to help prevent the dough from sticking. This changes the texture of the dough. (3) When the dough sticks to the pin and needs to be removed, the weight distribution of the dough becomes inconsistent, thereby creating uneven thickness and therefore uneven temperature when baking, so that some parts become more crisp than others.

It would be desirable to develop an improved rolling pin which avoids these disadvantages and allows dough to be rolled more easily than previously.

US 2,683,428 A discloses a rolling pin comprising a core with a corrugated exterior surface and a jacket on the core which defines a rolling surface. The jacket is a flexible plastic cover mounted on the core so as to either loosely fit upon the body portions of the core to reveal the corrugations of the core in the rolling surface, or tightly disposed upon the rolling pin so as to provide a smooth cylindrical surface. US 29,006 discloses a rubber roller for pressing confectionary mass against cutters to cut the confectionary. The roller comprises a rigid core over which vulcanized rubber or Gutta-Percha is put to form a rolling surface.

### SUMMARY OF THE INVENTION

The inventors have discovered that the disadvantages of known rolling pins may be avoided by a rolling pin which incorporates a silicone elastomer material on all or part of the exterior surface that contacts the dough. The invention thus provides a rolling pin including a core and a jacket on the core defining a rolling surface, the core having ends and the jacket being of such length and so positioned on the core as to define end regions of the jacket extending beyond the ends of the core. The rolling pin is characterized in that the jacket is a silicone-containing elastomer jacket, that the jacket end regions are folded inward over the ends of the core, and that each folded inward end region of the jacket is secured to the core by a cap.

The inventors have observed that silicone is far less adherent than other surfaces currently available for use on rolling pins (such as wood, plastic, Teflon®, marble, and various metal coatings, such as stainless steel and copper coatings). Very little if any additional flour is needed when using a silicone-surfaced pin, much less than with other surfaces. Silicone, because it is less adherent, is far easier to clean and therefore it is less likely for bacteria or food to remain on the pin after it is cleaned. Silicone can be made in any color and is safe for use in food preparation.

Particularly preferred are "food-grade silicones," which are certified safe for repeated use in contact with food by the U.S. Food and Drug Administration or another certifying authority. A particularly preferred composition is a mixtureof GE Bayer food-grade silicone elastomers, discussed in more detail below.

In a preferred embodiment of the invention, the jacket is made of a mixture of equal parts of two GE Bayer silicone elastomers, #SE 6070 EU LV and #SE 6033 EU LV. #6070 has a Shore A hardness of 70 and #6033 has a Shore A hardness of 33. The mixture, when cured, has a Shore A hardness of 51.5. Experiments have found that a Shore A hardness in the range of about 45-60 gives good results, neither so hard that it damages the food being rolled, nor so soft that it is itself easily damaged.

More generally, it is preferred to use a silicone material that is substantially chemically inert with respect to the food being rolled; does not affect taste or smell; is sufficiently non-stick to avoid the disadvantages of the conventional rollers; and can be formed into a jacket as described herein. One skilled in the art may be able to select other usable silicone materials, in addition to the above mentioned GE Bayer food-grade silicone elastomers, which are equivalent in the context of this invention.

The invention further extends to a jacket made of any silicone or silicone-containing material, even if not food-grade, which may be used in industrial contexts other than food preparation.

The rolling pin has a rigid central core which may be solid or hollow. The core (when hollow) may be supported by a series of disks or plates spaced along its length. A roller shaft passes through the row of disks. The core has a cylindrical peripheral shell. A tubular elastomer jacket is applied to the periphery of the core. The elastomer jacket comprises or consists of a silicone material selected according to the criteria explained above. The tubular silicone elastomer jacket is formed with an internal diameter corresponding to the external diameter of the core periphery.

The core has a first length. The tubular elastomer jacket is slightly longer, and is positioned on the core so that both end regions of the jacket project past the ends of the core. According to the invention, the end regions are bent or folded inwardly, at least partially covering the ends of the core.

In one fabrication method, the silicone elastomer jacket is molded, removed from the mold and then applied to the core. The jacket is preferably inverted during its application to the core so that its exterior, having mold marks, is inverted to become the interior of the jacket, and its smooth interior becomes the smooth exterior of the rolling pin jacket.

The rolling pin is preferably formed in a method, comprising: providing a core with a surface for receiving a jacket; molding a jacket of a silicone-containing material wherein the molded jacket is flexible and elastic to hold tightly to the core; after molding, removing the silicone jacket from the mold and applying the core by inverting the jacket as it is applied, so that the outside of the jacket is then the inside of the jacket; and applying end caps at the end of the core for securing the silicone jacket to the core after is has been applied to the core.

Other fabrication methods may of course be used to fabricate the silicone elastomer jacket and mount it to the core.

A plastic cap or a cap of another suitable material is then applied at each end of the core over the inwardly folded end regions of the silicone jacket. The caps have a central hole that enables them to pass the roller shaft. There is a connection between each cap and the end of the core, such as deformable cooperating hooks or clips or other detents or connectors, that hold the caps to the core. The end regions of the jacket are pressed tightly by the caps.

The end cap and silicone elastomer jacket are thereby sealed together to form a unitary structure which prohibits infiltration of any other material, food, dirt, etc.

Handles for rolling the pin may be attached at the ends of the shaft that passes through each end cap and through the core. The handles are held by a screw thread connection or a press-fit connection for example. Although the handles may be screwed on, they are preferably pressed onto non-threaded end regions of the shaft.

The rolling pin is used in the normal manner. Because of the silicone material in the elastomer jacket the material being rolled does not stick to the rolling pin, and the color of the silicone and therefore of the rolling pin can be freely selected.

Other features and advantages of the present invention will become apparent from the following description of embodiments of the invention which refers to the accompanying drawings.

### BRIEF DESCRIPTION OF THE DRAWINGS

Figure 1 is a perspective view of a silicone rolling pin according to a first embodiment of the invention.
Figure 2 shows a cross-section of one end of the rolling pin of Fig. 1.
Figure 3 is a side view of a rolling pin according to a second embodiment of the invention.
Figure 4 is a longitudinal cross-sectional view of the rolling pin of Fig. 3.
Figure 5 is an exploded perspective view of the rolling pin of Fig. 3.
Figures 6-9 show alternate embodiments of the invention.

### DETAILED DESCRIPTION OF EMBODIMENTS OF THE INVENTION

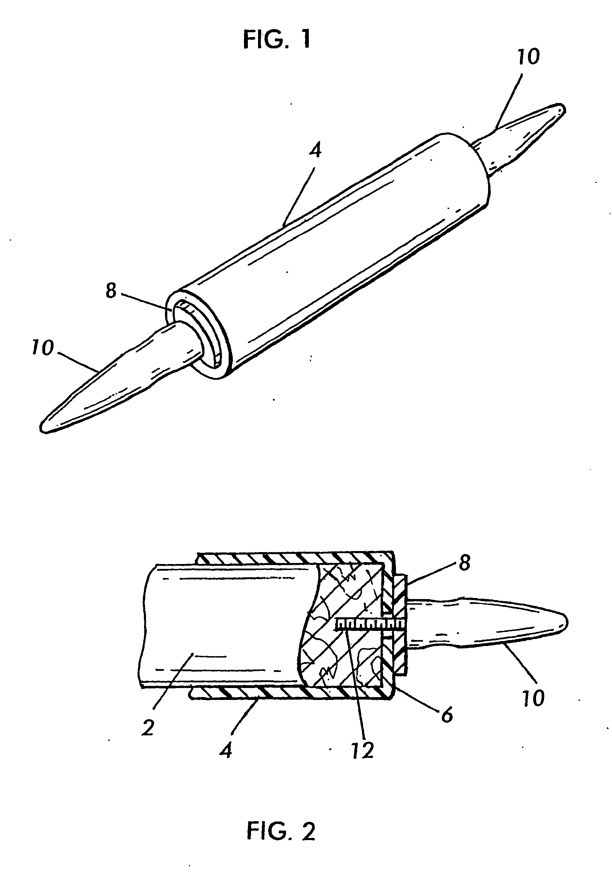

Figure 1 is a perspective view of a silicone rolling pin, including a silicone jacket 4, caps 8 at the end regions of the silicone jacket 4, and handles 10. Other features of the rolling pin not specifically discussed, such as the core 2, may be substantially conventional.

Figure 2 shows a cross-section of one end of the rolling pin, illustrating the various layers including the core 2, the silicone jacket 4, the end regions 6 of the silicone jacket, the caps 8 over the end regions 6 of the silicone jacket and handles 10 with a screw threaded (or dowel) support 12 passing through the cap 8 and into the core 2, as one example of a mode of how to attach the handle to the rolling pin.

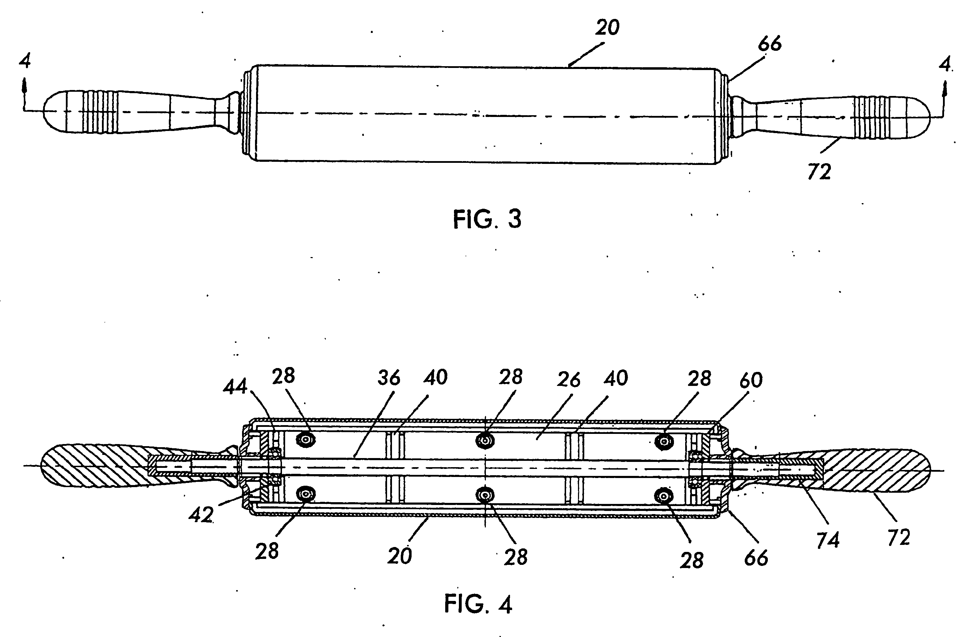

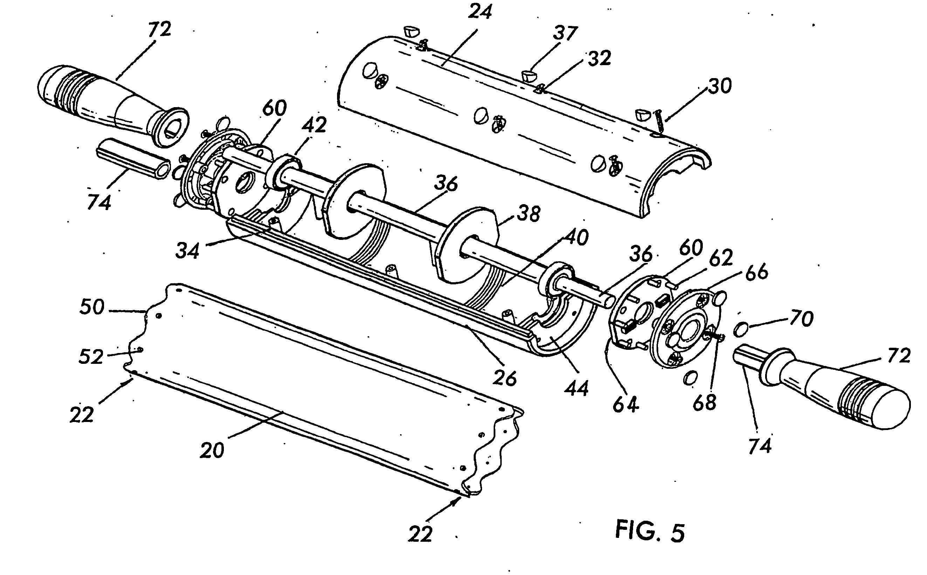

A second embodiment of the invention is shown in Figs. 3, 4 and 5. Figure 3 is a side view of a rolling pin having a jacket 20, end caps 66 and handles 72 similar to those in the first embodiment. Referring now to Figs. 4 and 5, the core comprises two hollow half shells 24, 26 secured to each other by connectors 28 spaced along their abutting edges. In this embodiment, the connectors 28 comprise screws 30 which pass through countersunk screwholes 32 in the half shell 24 and into tapped portions 34 formed in the half shell 26. Caps 37 are provided for covering the screws 30 to make the outer surface of the half shell 24 smooth. A shaft 36 extends through the core 2. Spaced disks 38 are spaced apart along the shaft 36 and support the shell 24, 26 during use of the rolling pin. The disks 38 engage grooves 40 formed internally in both of the half shells 24 and 26.

The shaft 36 is held in place lengthwise by a pair of bearings 42 which engage respectively pairs of flanges 44 formed internally near the two ends of the half shells 24,26.

A silicone elastomer jacket 20 is disposed over the core, as described above. The silicone elastomer jacket has end regions 22 extending beyond the ends of the core. In this embodiment the end regions 22 may have scallops 50, and holes 52 corresponding respectively to the scallops 50, as discussed further below.

A pair of inner end caps 60 are disposed slightly inside the two ends of the core. Each inner end cap 60 has a plurality of pegs 62 which are arranged to correspond to the holes 52 formed in the elastomer jacket 20. Flats 64 on the inner end caps 60 engage the half shells 24, 26 to prevent relative movement.

The elastomer jacket 20 is placed on the core 24, 26 and the pegs 62 on the inner end caps 60 are passed through the holes 52 in the jacket. An outer end cap 66 is placed against the pegs 62 at each end of the core. The outer end caps 66 are secured to the core by screws 68 which pass through holes in the inner end caps 60 and are screwed into the flanges 44. Caps 70 cover the screws 68.

As best seen in Fig. 4, the outer end caps 66 overlie the end regions 22 of the jacket 20 so as to retain the end regions 22 on the pegs 62, thereby securing the jacket to the core.

Handles 72 are press fitted via sleeves 74 onto the ends of the shaft 36 that pass through the end caps 60, 66 and the core 24, 26. This is another example of a mode of attaching the handles to the rolling pin.

Thus, the half shells 24, 26, the disks 38, the end caps 60, 66 and the silicone jacket 20 form a unit which rotates together around the shaft 36 when the rolling pin is used for rolling dough. The handles 72, sleeves 74 and shaft form a second unit. Relative movability of the first and second units is provided by the bearings 42.

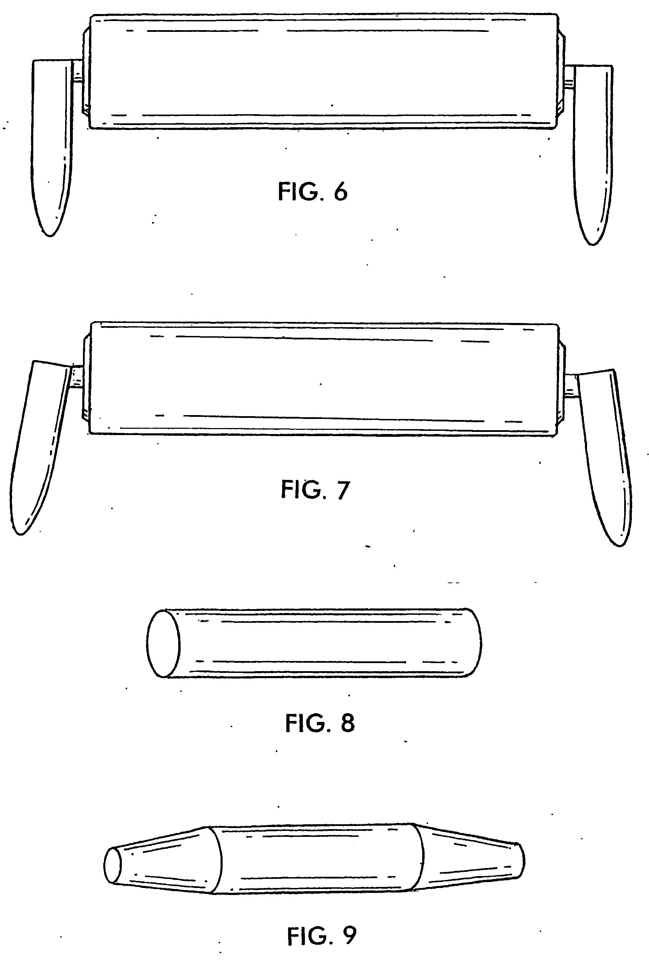

In other embodiments of the invention, shown in Figures 6 and 7, respectively, the handles may be mounted perpendicular or at another angle to the shaft for use in a confined space such as a narrow, deep baking pan. Further, a "baker style" rolling pin which is essentially shaped as a cylinder without handles (Figure 8), or a "French style" rolling pin with tapered ends and again without handles (Figure 9), are also within the scope of the invention.

Other equivalent arrangements may be substituted. For example, the bearing or bearings may be located at other locations along the core or in the handles. The shaft need not be continuous.

Although the present invention has been described in relation to particular embodiments thereof, many other variations and modifications and other uses will become apparent to those skilled in the art. Therefore, the present invention is not limited by the specific disclosure herein.

## Claims

1. A rolling pin including a core (2, 24, 26) and a jacket (4, 20) on the core defining a rolling surface, the core (2, 24, 26) having ends and the jacket (4, 20) being of such length and so positioned on the core (2, 24, 26) as to define end regions (6, 22) of the jacket extending beyond the ends of the core (2, 24, 26) **characterized in that** jacket (4, 20) is a silicone-containing elastomer jacket, the jacket end regions (6, 22) are folded inward over the ends of the core (2, 24, 26), and each folded inward end region (6, 22) of the jacket is secured to the core (2, 24, 26) by a cap (8, 66).

2. The rolling pin of claim 1, further comprising a respective handle (10, 72) at each core end.

3. The rolling pin of claim 2, wherein a shaft (12, 36) passes between the handles (10, 72) and through the core (2, 24, 26), the core being rotatable about the shaft (12, 36).

4. The rolling pin of claim 3, wherein said handles (10, 72) define a non-zero angle with respect to the shaft (12, 36).

5. The rolling pin of claim 4, wherein said handles (10, 72) are perpendicular with respect to the shaft (12, 36).

6. The rolling pin of claim 1, wherein said jacket (4, 20) consists essentially of food-grade silicone-elastomer.

7. The rolling pin of claim 1, wherein said jacket (4, 20) consists essentially of silicone elastomer having a Shore A hardness in the range of about 45-60.

8. The rolling pin of claim 7, wherein said Shore A hardness is about 51.5.

9. The rolling pin of claim 1, wherein said jacket (4, 20) consists essentially of a mixture of GE Bayer Silicone #SE 6070 EU LV and #SE 6033 EU LV.

10. The rolling pin of claim 1, wherein holes (52) are formed in the end regions (6, 22) of the jacket (4, 20) which are folded inwardly and engage corresponding pegs (62) mounted on the core (2, 24, 26).

11. The rolling pin of claim 1, wherein holes (52) are formed in the end regions (6, 22) of the jacket which are folded inwardly and engage corresponding pegs (62) on the cap (8, 66).

12. The rolling pin of claim 1, wherein said silicone-containing elastomer jacket (4, 20) consists essentially of a silicone material that is substantially chemically inert with respect to food to be rolled by the rolling pin, does not affect taste or smell of the food being rolled, is substantially non-stick and can be formed into a jacket (4, 20) to be applied on the core (2, 24, 26).

## Patentansprüche

1. Teigrolle umfassend einen Kern (2, 24, 26) und einen Mantel (4, 20) auf dem Kern, der eine Rolloberfläche festlegt, wobei der Kern (2, 24, 26) Enden aufweist und der Mantel (4, 20) eine derartige Länge aufweist und so auf dem Kern (2, 24, 26) positioniert ist, dass Endbereiche (6, 22) des Mantels gebildet werden, die sich über die Enden des Kerns (2, 24, 26) hinaus erstrecken, **dadurch gekennzeichnet, dass** der Mantel (4, 20) ein Silikon-enthaltender Elastomermantel ist, die Mantel-Endbereiche (6, 22) nach innen, über die Enden des Kerns (2, 24, 26) gefaltet sind, und jeder nach innen gefaltete Endbereich (6, 22) des Mantels jeweils durch eine Kappe (8, 66) an dem Kern (2, 24, 26) befestigt ist.

2. Teigrolle nach Anspruch 1, weiter umfassend einen entsprechenden Handgriff (10, 72) an jedem Kernende.

3. Teigrolle nach Anspruch 2, wobei eine Welle (12, 36) zwischen den Handgriffen (10, 72) und durch den Kern (2, 24, 26) hindurch läuft, wobei der Kern um die Welle (12, 36) drehbar ist.

4. Teigrolle nach Anspruch 3, wobei die Handgriffe (10, 72) zur Welle (12, 36) einen Winkel festlegen, der nicht Null ist.

5. Teigrolle nach Anspruch 4, wobei die Handgriffe (10, 72) zur Welle (12, 36) senkrecht sind.

6. Teigrolle nach Anspruch 1, wobei der Mantel (4, 20) im Wesentlichen aus Silikonelastomer mit Lebensmittelqualität besteht.

7. Teigrolle nach Anspruch 1, wobei der Mantel (4, 20) im Wesentlichen aus Silikonelastomer mit einer Shore A-Härte im Bereich von ungefähr 45 bis 60 besteht.

8. Teigrolle nach Anspruch 7, wobei die Shore A-Härte ungefähr 51,5 beträgt.

9. Teigrolle nach Anspruch 1, wobei der Mantel (4, 20) im Wesentlichen aus einer Mischung aus GE Bayer Silicone #SE 6070 EU LV und #SE 6033 EU LV besteht.

10. Teigrolle nach Anspruch 1, wobei Löcher (52) in den nach innen gefalteten Endbereichen (6, 22) des Mantels (4, 20) gebildet sind und in Eingriff mit entsprechenden Zapfen (62) stehen, die an dem Kern (2, 24, 26) angebracht sind.

11. Teigrolle nach Anspruch 1, wobei Löcher (52) in den nach innen gefalteten Endbereichen (6, 22) des Mantels gebildet sind und in Eingriff mit entsprechenden Zapfen (62) an der Kappe (8, 66) stehen.

12. Teigrolle nach Anspruch 1, wobei der Silikon-enthaltende Elastomermantel (4, 20) im Wesentlichen aus einem Silikonmaterial besteht, das im Wesentlichen chemisch inert ist gegenüber Lebensmitteln, die von der Teilgrolle auszurollen sind, den Geschmack oder Geruch der auszurollenden Lebensmittel nicht beeinträchtigt, im Wesentlichen nicht haftend ist und woraus ein Mantel (4, 20) zum Aufziehen auf den Kern (2, 24, 26) gebildet werden kann.

## Revendications

1. Rouleau à pâtisserie comportant un noyau (2, 24, 26) et une enveloppe (4, 20) sur le noyau, définissant une surface de roulement, le noyau (2, 24, 26) comportant des extrémités et l'enveloppe (4, 20) présentant une telle langueur et étant positionnée sur le noyau (2, 24, 26) de manière à définir des zones d'extrémité (6, 22) de l'enveloppe s'étendant au delà des extrémités du noyau (2, 24, 26), **caractérisé en ce que** l'enveloppe (4, 20) est une enveloppe en élastomère contenant du silicone, les zones d'extrémité d'enveloppe (6, 22) sont pliées vers l'intérieur sur les extrémités du noyau (2, 24, 26), et chaque zone d'extrémité pliée vers l'intérieur (6, 22) de l'enveloppe est fixée sur le noyau (2, 24, 26) par une capsule (8; 66).

2. Rouleau à pâtisserie selon la revendication 1, comprenant, en outre, une poignée respective (10, 72) à chaque extrémité de noyau.

3. Rouleau à pâtisserie selon la revendication 2, dans lequel un arbre (12, 36) passe entre les poignées (10, 72) et à travers le noyau (2, 24, 26), le noyau pouvant tourner autour de l'arbre (12, 36).

4. Rouleau à pâtisserie selon la revendication 3, dans lequel lesdites poignées (10, 72) définissent un angle non nul par rapport à l'arbre (12, 36).

5. Rouleau à pâtisserie selon la revendication 4, dans lequel lesdites poignées (10, 72) sont perpendiculaires par rapport à l'arbre (12, 36).

6. Rouleau à pâtisserie selon la revendication 1, dans lequel ladite enveloppe (4, 20) consiste principalement en un élastomère à base de silicone de dualité alimentaire.

7. Rouleau à pâtisserie selon la revendication 1, dans lequel ladite enveloppe (4,20) consiste principalement en un élastomère à base de silicone présentant une dureté Shore A dans la plage de 45 à 60 environ.

8. Rouleau à pâtisserie selon la revendication 7, dans lequel ladite dureté Shore A est égale à 51,5 environ.

9. Rouleau à pâtisserie selon la revendication 1, dans lequel ladite enveloppe (4, 20) consiste principalement en un mélange de silicone GE Bayer N° SE 6070 EU LV et N° SE 6033 EU LV.

10. Rouleau à pâtisserie selon la revendication 1, dans lequel des orifices (52) sont formés sur les zones d'extrémité (6, 22) de l'enveloppe (4, 20) qui sont repliées vers l'intérieur et sont assemblés avec des goupilles correspondantes (62) montées sur le noyau (2, 24, 26).

11. Rouleau à pâtisserie selon la revendication 1, dans lequel des orifices (52) sont formés sur les zones d'extrémité (6, 22) de l'enveloppe qui sont repliées vers l'intérieur, et assemblés avec des goupilles correspondantes (62) sur la capsule (8, 66).

12. Rouleau à pâtisserie selon la revendication 1, dans lequel ladite enveloppe en élastomère contenant du silicone (4, 20) consiste principalement en un matériau à base de silicone qui est sensiblement chimiquement inerte par rapport aux aliments à rouler avec le rouleau à pâtisserie, n'affecte pas le goût ou l'odeur de l'aliment roulé, est sensiblement non adhérent et peut être mis en forme d'enveloppe (4, 20) à appliquer sur le noyau (2, 24, 26).
